# EUROPEAN PATENT SPECIFICATION

(11) **EP 4 061 569 B1**
(45) Date of publication and mention of the grant of the patent: **17.12.2025**
(21) Application number: 20889569.8
(22) Date of filing: 15.10.2020
(51) Int. Cl.: B23B 45/02, E21B 3/02, B28D 1/14, B28D 7/00, E21B 11/00, A01C 5/02

(54) **DIGGING APPARATUS WITH SAFETY MECHANISM**
GRABVORRICHTUNG MIT SICHERHEITSMECHANISMUS
APPAREIL D'EXCAVATION À MÉCANISME DE SÉCURITÉ

(30) Priority: 18.11.2019 HK 19132358
(43) Date of publication of application: 28.09.2022
(73) Proprietor: Techtronic Cordless GP, Anderson, SC 29621 (US)
(72) Inventor: CHEN, Hui Jian, Dongguan, Guangdong (CN); LAN, Xiao Di, Dongguan, Guangdong (CN); WANG, Yan Jia, Dongguan, Guangdong (CN); FELDKAMP, Jonathan Robert, Anderson, South Carolina 29621 (US); SHAO, Shuai, Anderson, South Carolina 29621 (US); KONDRO, Grzegorz, Anderson, South Carolina 29621 (US); MCENTYRE, Richard Michael, Anderson, South Carolina 29621 (US); TORRISI, Gregory Scott, Anderson, South Carolina 29621 (US); MCCALLUM, John Eugene, Anderson, South Carolina 29621 (US); CHUNG, Koon For, Hong Kong (CN)
(74) Representative: Zimmermann & Partner Patentanwälte mbB
(86) International application number: PCT/CN2020/121154
(87) International publication number: WO 2021/098417

(56) References cited:
- EP-A1- 0 808 018
- EP-A2- 1 470 898
- EP-A2- 1 881 382
- EP-A2- 1 881 382
- WO-A1-2009/032314
- WO-A1-2014/110596
- WO-A1-2018/171346
- CN-A- 103 899 291
- CN-A- 107 013 163
- US-A- 4 871 033
- US-A- 5 358 062
- US-A- 5 954 457
- US-A1- 2003 116 332
- US-A1- 2007 084 613
- US-A1- 2016 319 752

## Description

### FIELD OF THE INVENTION

The present disclosure generally relates to a hand-operated digging apparatus, and particularly relates to an electric powered ground auger suitable, but not exclusively, for digging into the substrate with safety mechanism.

### BACKGROUND OF THE INVENTION

Hand-operated digging apparatus, such as ground augers, are widely used to penetrate the ground and dig holes in the earth. A typical electric powered digging apparatus often includes a powerhead and a rotatable drill bit with a helical auger blade coaxially mounted around the drill bit. An electric powered motor in the powerhead drives the drill bit and rotates the helical auger blade downwardly into the soil.

Generally, hand-operated digging apparatuses are designed to be used with a broad range of soil or sand types having diverse physical properties and compositions. When operating a hand-operated digging apparatus in difficult ground conditions, or drilling through stones or hard rocks, such as granite or limestone, the helical auger blade may not advance downwardly and a kickback may occur, resulting in an opposite torque exerted on the operator of the digging apparatus. If the operator is not gripping the handles of the digging apparatus with sufficient force, the hand-operated digging apparatus may dangerously and uncontrollably self-rotate, which may cause injury to the operator. A typical digging apparatus may not be equipped with safety mechanisms for preventing kickback of the digging apparatus.

In addition, the maximum torque of a hand-operated digging apparatus is generally predefined by the manufacturer and the degree of customization for each individual operator may be not possible. In real world applications, it can be inefficient or even dangerous to use the same maximum driving power for all operators, without taking into account the operator's physical strength. If the operator is not physically strong enough and is not able to safely control a hand-operated digging apparatus with high torque, kickback may occur more frequently and the operator may be presented with a higher chance of personal injury.

International patent application publication no. WO 2018/171346 A1 describes a digging apparatus including a motor and a digging tool driven by said motor in a first rotational direction and a second rotational direction which is opposite to said first rotational direction. The digging apparatus further including a measuring device for measuring the angular velocity of said digging tool, and a controller for stopping operation of said motor in response to the angular velocity of said digging tool. US patent application publication no. US 2016/319752 A1 describes a petrol-powered post hole digger having a safety control device comprising a touch rod which reduces the engine torque by releasing its throttle cable to get a lower speed.

In view of at least the foregoing deficiencies of conventional electric powered hand-operated digging apparatus, there is a need in the art for an improved digging apparatus that has a stopping or a braking mechanism for minimizing the chance of accidents and/or abnormal operation.

### SUMMARY OF THE INVENTION

Provided herein is an electric powered digging apparatus, comprising: a powerhead, the power head comprises a motor and a gearbox; a handle frame, the powerhead is mounted onto the handle frame; and a drill bit, the drill bit is driven by the motor to rotate around a longitudinal axis, the electric power digging apparatus further comprises: a first safety mechanism, wherein the first safety mechanism reduces torque output to the drill bit when the powerhead spins around the longitudinal axis for an angle larger than a first threshold, and a second safety mechanism, wherein the second safety mechanism reduces torque output to the drill bit when the powerhead spins around the longitudinal drive axis at an angular speed larger than a second threshold, wherein the first safety mechanism comprises a braking lever extending out from the handle frame, the braking lever is pivotable relative to the handle frame from a starting position to an end position, an angle between the starting position and the end position of the braking lever is larger than or equal to the first threshold.

According to certain aspects, the braking lever is pivotable to a first end position corresponding to a first angle at which the first safety mechanism is actuated, and the brake lever is further pivotable to a second end position corresponding to a second angle at which the first safety mechanism is actuated again.

According to certain aspects, the first safety mechanism further comprises a sensor for sensing the pivoting angle of the braking lever.

According to certain aspects, the first safety mechanism further comprises a switch to be actuated by the braking lever as it pivots from the starting position to the end position.

According to certain aspects, the first safety mechanism further comprises a biasing member for returning the braking lever from the end position to the starting position.

According to certain aspects, the starting position of the braking lever is adjustable.

According to certain aspects, the second safety mechanism comprises a rotation sensor coupled to the power head or the handle frame, the rotation sensor is configured to measure the angular speed of the power head or the handle frame.

According to certain aspects, the rotation sensor is a gyroscopic sensor.

According to certain aspects, the electric power to the motor is cut off when at least one of the first safety mechanism and the second safety mechanism is actuated.

According to certain aspects, the electric power to the motor is reduced so that the motor output toque is reduced when at least one of the first safety mechanism and the second safety mechanism is actuated.

According to certain aspects, the motor rotation is reversed for a predetermined period of time when at least one of the first safety mechanism and the second safety mechanism is actuated.

According to certain aspects, the powerhead further comprises a clutch, the clutch is actuated to lock the motor and/or gearbox when at least one of the first safety mechanism and the second safety mechanism is actuated.

According to certain aspects, the digging apparatus further comprises a current sensor, electric power to the motor is cut off when the current sensor measures an electric current to the motor larger than a third threshold.

According to certain aspects, the digging apparatus further comprises a control module, the control module is configured to input, store and apply user-specific operation profile, wherein each user-specific operation profile allows a respective user to specify at least one of the first threshold and the second threshold.

According to certain aspects, the control module is configured for the user to input a respective operation profile with a learning mode, at least one of the first threshold and the second threshold is determined when a specified event occurs as a motor output torque is increased from zero.

According to certain aspects, the specified event is selected from one of the following: a user releases a trigger, a user presses a trigger, the powerhead spins for a predetermined angle, the powerhead spins above a predetermined angular speed, and the powerhead spins above a predetermined angular acceleration speed.

According to certain aspects, the digging apparatus further comprises a threshold selector for an operator to select from multiple values for the first threshold and/or the second threshold.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. Other aspects and advantages of the present invention are disclosed as illustrated by the embodiments hereinafter.

### BRIEF DESCRIPTION OF THE DRAWINGS

The appended drawings contain figures to further illustrate and clarify the above and other aspects, advantages and features of the present disclosure. It will be appreciated that these drawings depict only certain embodiments of the present disclosure and are not intended to limit its scope. It will also be appreciated that these drawings are illustrated for simplicity and clarity and have not necessarily been depicted to scale. The present disclosure will now be described and explained with additional specificity and detail through the use of the accompanying drawings in which:
FIG. **1** is a perspective view of an electric powered digging apparatus with safety mechanism in accordance with certain embodiments of the present disclosure;
FIG. **2** is a perspective view of another electric powered digging apparatus with safety mechanism in accordance with certain embodiments of the present disclosure;
FIG. **3** is a perspective view of a housing of the powered digging apparatus with safety mechanism in accordance with certain embodiments of the present disclosure;
FIG. **4** is a perspective view of the motor and the gearbox in accordance with certain embodiments of the present disclosure;
FIG. **5** is an exploded view of the motor of FIG. **4** in accordance with certain embodiments of the present disclosure;
FIG. **6** is an exploded view of the gearbox of FIG. **4** in accordance with certain embodiments of the present disclosure;
FIG. **7** is a front view of a drill bit of the digging apparatus of FIGS. **1** or **2** in accordance with certain embodiments of the present disclosure;
FIG. **8** is an exploded view of the braking lever and hinge of the digging apparatus of FIGS. **1** or **2** in accordance with certain embodiments of the present disclosure;
FIG. **9** is a schematic electrical connection diagram of the digging apparatus of FIGS. **1** or **2** in accordance with certain embodiments of the present disclosure;
FIG. **10A** is a current profile of the digging apparatus of FIGS. **1** or **2** with increasing electric current from the battery in accordance with certain embodiments of the present disclosure; and
FIG. **10B** is a graph showing the electric current measurement when the digging apparatus of FIGS. **1** or **2** hits stones and the motor is cut off.

### DETAILED DESCRIPTION OF THE INVENTION

The present disclosure generally relates to an electric powered hand-operated digging apparatus for digging into the substrate. More specifically, but without limitation, the present disclosure relates to a hand-operated digging apparatus, such as a ground auger, for digging into the substrate with safety mechanism. It is an objective of the present disclosure to provide a digging apparatus having a stopping or a braking mechanism that can be customized for each operator and/or for preventing abnormal operation (e.g., kickback).

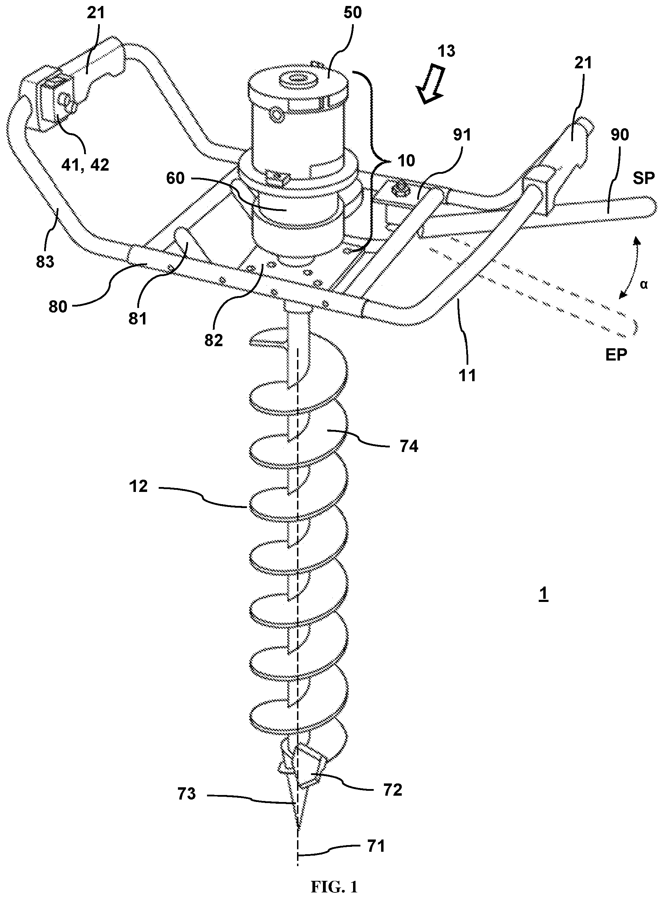

**FIGS. 1-2** show perspective views of a digging apparatus **1** in accordance with certain embodiments of the present disclosure. The digging apparatus **1** comprises a powerhead **10,** a handle frame **11** and a drill bit **12.** For the sake of clarity, a housing of the powerhead **10** is not shown. The digging apparatus **1** may be a hand-operated auger that can be used for a variety of applications, and in particular, for drilling small-dimension deep holes into substrate. The substrate may be soil, sand, wall, wood, concrete, ice, etc. For instance, the drilled hole can be used for planting a tree, piling a post, or constructing a building foundation. In the case of ice drilling, the drilled hole can be used for ice fishing and under-ice exploration. An operator usually places the digging apparatus **1** vertically above the desired position of the hole to be drilled so that the drill bit **12** can drill vertically downward into the substrate.

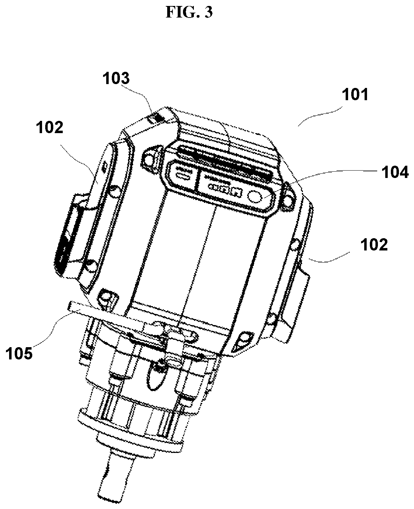

The powerhead **10** may include a motor **50** and a gearbox **60.** A housing **101** of the powerhead **10** according to certain embodiments of the present disclosure is shown in **FIG. 3****.** The housing **101** comprises one or more battery interfaces **102** for receiving one or more batteries. The battery may be a 36V lithium battery pack or two 18V lithium battery packs. In certain embodiments, two battery interfaces **102** are provided at the two sides of the housing **101.** In other embodiments, one battery interface is provided at the rear of the housing **101.** The housing **101** further comprises one or more venting holes **103** so air can be drawn into and driven out of the housing **101** for cooling of the motor **50** and the gearbox **60.** In certain embodiments, the venting holes **103** may be provided at the top and/or bottom of the housing **101.** The housing **101** may also provide a user interface **104** for an operator to control and/or configure the digging apparatus **1.** The user interface **104** may comprise one or more of indicator, display, mechanical button, membrane button, and touch screen. The housing **101** may also have an electrical interface **105** for electrical communication with one or more sensors disposed outside the housing.

The handle frame **11** of the digging apparatus **1** may include a bottom frame **80** and two side frames **83.** One or more handle grips **21** are mounted to or from the handle frame **11.** In certain embodiments, the bottom frame **80** defines a sunk area, such that the powerhead **10** is at least partially surrounded by the bottom frame **80** for better protection. The powerhead **11** may be attached to and detached from the bottom frame **80** through a mounting plate **82** for easy transportation. In certain embodiments such attachment and detachment are achieved without using of tools. A soft protective material may be wrapped around the tubular steel of the bottom frame **80** and/or the side frames **83** to reduce the transmission of vibration from the digging apparatus **1** to the operator when operating the digging apparatus **1.** The mounting plate **82** is perpendicular to a longitudinal drive axis **71,** which extends generally vertical from the motor **50** to a distal end **73** of the drill bit **12.**

Two side frames **83** are mounted to or otherwise fixed to the bottom frame **80.** In certain embodiments as shown in **FIG. 1****,** the two side frames **83** are symmetrical to each other and may each have a U-shape. The two side frames **83** may bend upwardly from the bottom frame **80.** In such a configuration, the handle grips **21** can have a higher vertical position than the bottom frame **80.** In other words, the bottom frame **80** can be at a level around an operator's waist or thigh when the operator grips the two handle grips **21** and operate the digging apparatus **1.** This is useful for the safety mechanism to work, which will be discussed later.

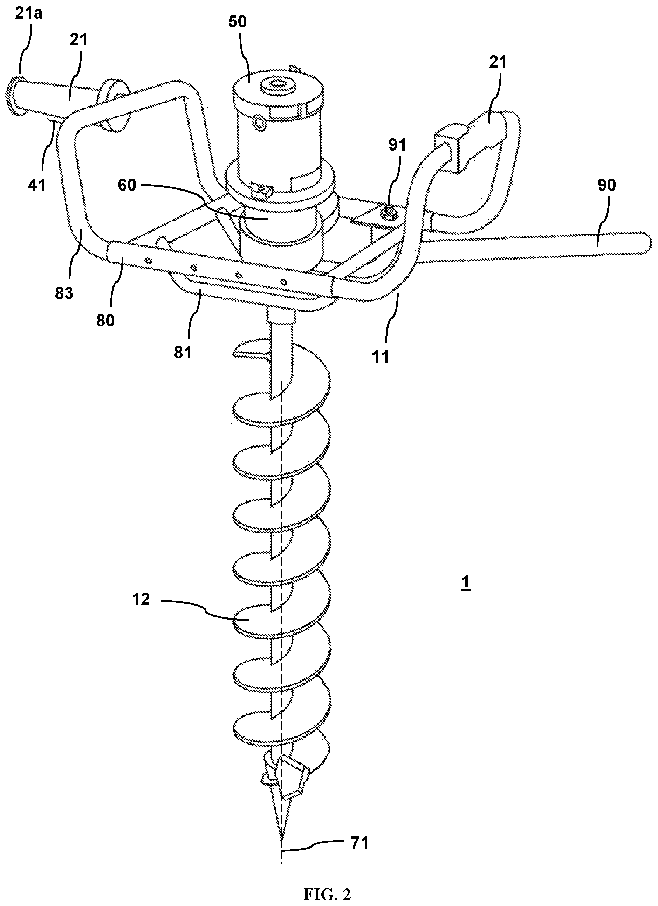

In certain embodiments, there are two handle grips **21** connected to opposing sides of the handle frame **11.** The two handle grips **21** may be respectively provided at the middle part of the two side frames **83.** The two handle grips **21** can be configured symmetrically as shown in **FIG. 1** or asymmetrically as shown in **FIG. 2****.** The handle grip **21** can surround a portion of the side frame **83** or extend out of the side frame **83** away from the motor **50** with a free end **21a** pointing away from the motor **50.** By configuring the handle grip **21** to extend out of the handle frame **11,** the dimension of the handle frame **11** can be reduced, while the distance between two handle grips **21** can be maintained for an operator to apply sufficient torque without too much difficulty.

In certain embodiments, a control button **41** is provided on at least one of the handle grips **21,** to be manually operable by the operator. The control button **41** may be switched between an "ON" position and an "OFF" position. When the control button **41** is in the "ON" position, the motor **50** of the digging apparatus **10** may be operated. When the control button **41** is in the "OFF" position, the motor **50** of the digging apparatus **10** is prevented from being operated.

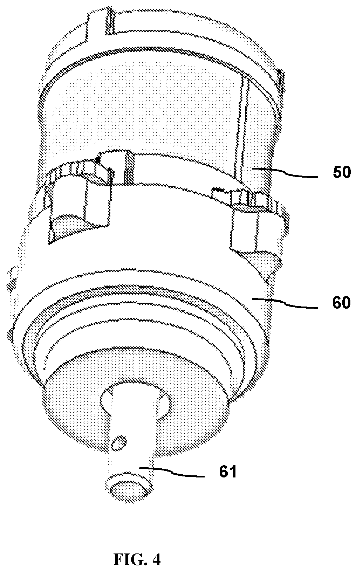

To assemble the powerhead **11** of the digging apparatus **1,** the motor **50** and the gearbox **60** are mounted to each other and placed within the housing **101.** The housing **101** is mounted on a mounting plate **82.** The mounting plate **82** is welded or otherwise fixed to one or more support tubes **81.** In certain embodiments, the support tubes **81** can have a V-shape, a U-shape, or any other desired shape. The support tubes **81** are welded or otherwise securely attached to the bottom frame **80** to form a protective frame component for the motor **50** and the gearbox **60,** with an output shaft **61** extending downward outside the mounting plate **82.** As shown in FIG. **4****,** the motor **50** is mounted on top of the gearbox **60** for driving the digging apparatus **1.** In certain embodiments, the motor **50** may drive a clutch (not shown) placed within the case holding the gearbox **60,** and the clutch further drives the gearbox **60.** The clutch can be a mechanical clutch or an electronic clutch. The gearbox **60** has an output shaft **61** for driving the drill bit **12.** The gearbox **60** is configured to be driven by the motor **50** with a gear reduction ratio.

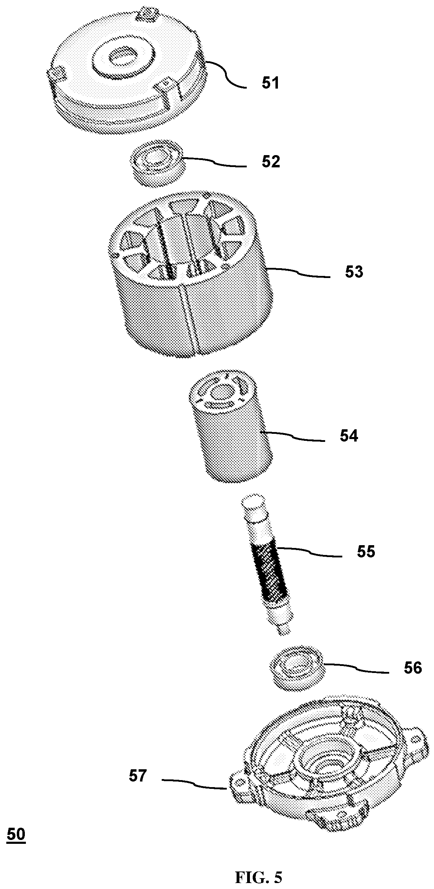

As shown in more detail in FIG. **5****,** in certain embodiments the motor **50** of the powerhead **11** of the digging apparatus **1** comprises an upper housing **51,** a first motor bearing **52,** a stator **53,** a rotor **54,** a rotor shaft **55,** a second motor bearing **56,** and a lower housing **57.**

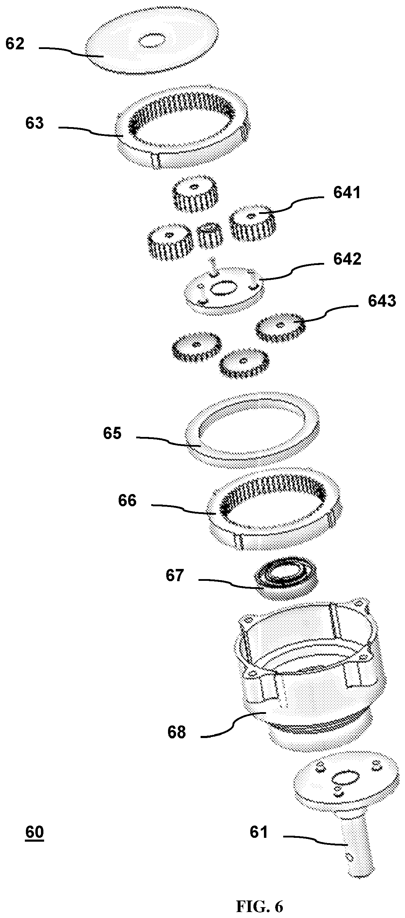

As shown in more detail in FIG. **6****,** in certain embodiments the gearbox **60** of the powerhead **11** of the digging apparatus **1** comprises a washer **62,** a first ring gear **63,** a first layer planetary gear **641,** a first layer planet carrier **642,** a second layer planetary gear **643,** a retaining ring **65,** a second ring gear **66,** a gearbox bearing **67,** a gearbox housing **68,** and an output shaft **61.**

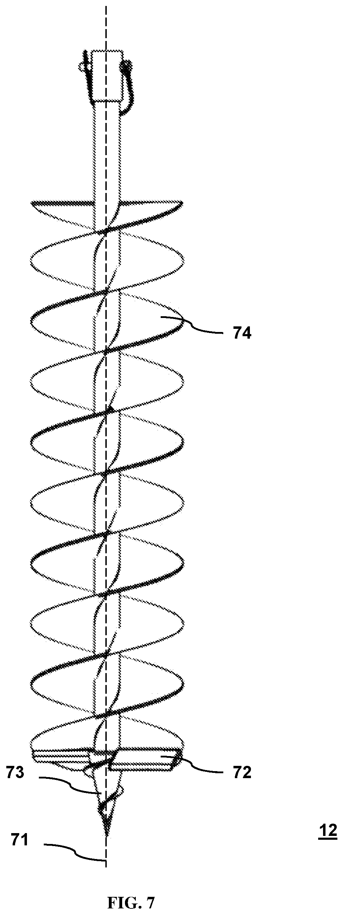

In certain embodiments, the drill bit **12** is operatively associated with and driven by the motor **50** via the gearbox **60.** Now referring to FIG. **7****,** the drill bit **12** is releasably connected to the powerhead **11** and is concentric and coaxial with the output shaft **61.** The output shaft **61** is at the bottom of the powerhead **11.** The drill bit **12** and the output shaft **61** share the same longitudinal drive axis **71.** The longitudinal drive axis **71** is the axis about which rotation of the drill bit **12** occurs. The drill bit **12** extends vertically along and rotates around the longitudinal drive axis **71** to a distal end **73** and makes contact with the ground or the substrate to be dug. In certain embodiments, the drill bit **12** comprises one or more flight teeth **72** at the distal end **73** of the drill bit **12,** and a helical auger blade **74** coaxially mounted around the drill bit **12** and spirally screwed towards the distal end **73** of the drill bit **12.** When in use, e.g. when the drill bit **12** of the digging apparatus **1** abuts or penetrates a substrate to be dug, as the longitudinal drive axis **71** extends generally vertically, the direction of movement of the handle grips **21** (and the powerhead **11)** is generally downward. Upon movement of the handle grips **21** in this direction and the activation of the control button **41,** the powerhead **11** is configured to enable electric power supplied from the battery to the motor **50.** As such, the motor **50** drives the output shaft **61** to rotate in a clockwise direction (when seen from FIG. **1****)** and causes the drill bit **12** to rotate in the same direction. The drill bit **12** can dig and move downward into the substrate, thus also move the digging apparatus **1** downward into the substrate.

The digging apparatus **1** of the present disclosure comprises at least a first safety mechanism and a second safety mechanism for anti-kickback purpose. When kickback happens and the motor **50** keeps working, the drill bit **12** is stalled and the powerhead **11** and the handle frame **12** start spinning in an opposite direction. This is particularly dangerous to the operator as the operator's hands still hold the handle frame **12.** It is therefore essential that the spinning be minimized to protect the operator. In essence, the first safety mechanism and a second safety mechanism work under different principles to reduce or cut off power output in case of kickback, either immediately or after a predetermined period of time. The waiting for a predetermined period of time helps to prevent false alarms due to, e.g. sensor error or operator gaining back control.

In certain embodiments, when the first and/or second safety mechanism is actuated, power supply to the motor is cut off either immediately or after a predetermined period of time. In certain embodiments, when the first and/or second safety mechanism is actuated, the power supply to the motor is not cut off but reduced. As a result, the motor output torque is reduced. This may help the operator to gain back control and hold the digging apparatus steady as the operator's output torque may surpass the motor output torque. In this way, the digging operation is not interrupted. Under such configuration, there may be provided at least one further determination whether the operator is able to gain back control or the kickback stops. If not, the first and/or second safety mechanism can be actuated again to further reduce or cut off power supply to the motor. In certain embodiments, rather than passively preventing kickback, active measures can be taken when the first and/or second safety mechanism is actuated. For instance, the clutch with the gearbox can lock the motor or the gearbox in case of kickback. In other embodiments, the motor rotation can be reversed for a predetermined period of time.

In certain embodiments, the first safety mechanism is actuated when the powerhead spins an angle over a first threshold. The first threshold can be a fixed one, or adjustable according to different operators. In certain embodiments, the first threshold can be an angle between 10 degrees and 60 degrees, between 15 degrees and 45 degrees, or between 20 degrees and 30 degrees. The first safety mechanism can be actuated more than once during the operation of the digging apparatus. In other words, there can be more than one first threshold.

Refer back to FIG. **1****,** the first safety mechanism comprises a braking lever **90** that is coupled to the bottom frame **80** or another portion of the handle frame **11** and extends therefrom. The braking lever **90** extends in a plane generally perpendicular to the longitudinal drive axis **71.** In certain embodiments, this plane is substantially at the same level as the bottom frame **80,** or at a level that is around the operator's waist or thigh level. The level of the braking lever 90 may be adjustable to accommodate to operators of different heights.

The braking lever **90** can spin together with the handle frame **11,** but as it hits some obstacle (e.g. operator's waist or thigh), the braking lever **90** can pivot relative to the handle frame **11.** As the braking lever **90** pivots, it pivots between a starting position **SP** and an end position **EP,** defining an angle **α** therebetween. This angle **α** can be the same as or larger than the first threshold. The first safety mechanism can be actuated when or before the braking lever **90** pivots the angle **α** to the end position **EP.** In certain embodiments, the braking lever **90** can continue pivoting past the end position **EP.** This is mainly meant to avoid hurting the operator in case the spinning of powerhead **10** is not timely stopped.

In other embodiments, the braking lever **90** can pivot from the starting position **SP** to a first end position **EP1** and a second end position **EP2.** As the braking lever **90** pivots to the first end position **EP1,** the first safety mechanism can be actuated, and a first safety measure can be activated. If the braking lever **90** continues to pivot to the second end position **EP2,** the first safety mechanism can be actuated again, and a second safety measure can be activated. In certain embodiments, the first safety measure can be reducing power supply to the motor and the second safety measure can be cutting off power supply to the motor. In certain embodiments, the first safety measure can be cutting off power supply to the motor and the second safety measure can be reversing rotation of the motor for a predetermined period of time. Other combinations of first safety measure and second safety measure are also possible. Also, there can be more than two end positions.

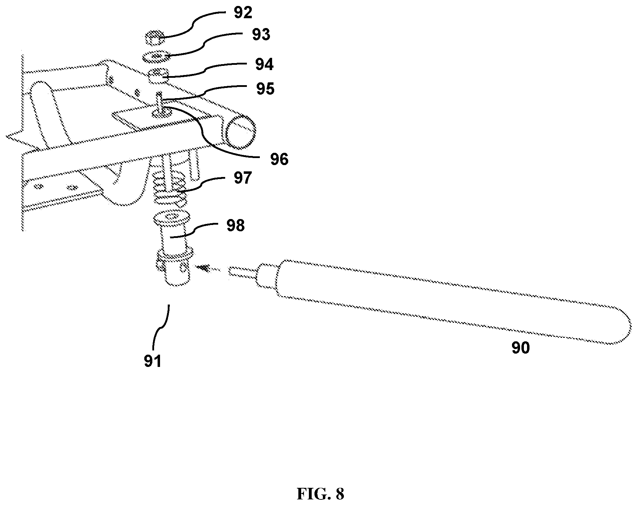

Referring to FIG. **8****,** in certain embodiments, one end of the braking lever **90** is connected to a hinge mechanism **91** mounted mainly on one side of the bottom frame **80.** The braking lever **90** by means of the hinge mechanism **91** is pivotable relative to the bottom frame **80.** In certain embodiments, the hinge mechanism **91** comprises a nut **92,** a first washer **93,** a cam **94,** a spindle **95,** a second washer **96,** a coil spring **97,** and a stem **98.** Both the stem **98** and the cam **94** are configured to fit onto the spindle **95.** This allows the stem **98** and the cam **94** to pivot from the starting position **SP** to the end position **EP** along with the braking lever **90** when an external force is applied to the braking lever **90.** On the other hand, the coil spring **97** can return the braking lever **90** from the end position **EP** to the starting position **SP** when the external force is gone. Biasing members other than the coil spring **97** can equally be used, such as magnets.

In certain embodiments, one or more lever sensor or mechanical switch (not shown) may be used to detect the pivotal movement of the braking lever **90,** thereby the first safety mechanism can be actuated as the first threshold is reached. The lever sensor can be an angle sensor that detects the pivoting angle of the braking lever **90.** The detected pivoting angle is then compared with the first threshold. Other types of sensor are equally applicable, such as a photodiode sensor, a magnetic sensor or a potentiometer. The mechanical switch can be coupled with the cam **94** of the hinge mechanism **91.** The contour of the cam surface corresponds to the pivoting angle of the braking lever **90.** The cam **94** can also be replaced with other structures of a similar function. Other ways of coupling the pivoting movement of the braking lever **90** to the sensor or switch are also possible and within the contemplation of the present disclosure.

The placement of the braking lever **90** (i.e. the starting position **SP)** can be dependent on the spiral direction of the helical auger blade **74.** For instance, as seen in FIG. **1****,** with the helical auger blade **74** screws towards the distal end **73** in a clockwise direction, the braking lever **90** is positioned at the left side of the digging apparatus **1** as viewed from the controller side **13** such that the braking lever **90** can be moved pivotally from the starting position **SP** to the end position **EP** during kickback. In certain embodiments, the braking lever **90** is positioned relative to the bottom frame **80** and may be adjustable by the operator in terms of position and orientation relative to the bottom frame **80.**

As the earth formation can be unpredictable with soil or sand having diverse physical properties and compositions, when drilling through stones or hard rock, such as granite or limestone, the helical auger blade **74** may not advance downwardly and a kickback may occur, causing an opposite force exerted on the operator. The digging apparatus **1** may dangerously self-rotate in a reverse circulation manner, which is an anticlockwise direction as viewed from the controller side **13.** Therefore, the drill bit **12** could possibly rotate abnormally without abutting the ground during the kickback, which may potentially cause injury of the operator at the lower body. Advantageously, the braking lever **90** in the digging apparatus **1** of the present disclosure is installed on the bottom frame **80** such that the braking lever **90** is rotated together with the bottom frame **80.** When the bottom frame **80** is rotated in an anticlockwise direction during the kickback, the braking lever **90** is also rotated in an anticlockwise direction and collides with the waist or thigh of the operator. As a result, the braking lever **90** is pushed to the end position **EP** during the collision, which is detected by the lever sensor **134** or switch and actuates the first safety mechanism. The sensitivity of the lever sensor **134** may also be adjustable. The braking lever **90** will return to the starting position **SP** under the influence of the hinge **91** without collision.

In certain embodiments, the second safety mechanism is actuated when the powerhead spins at an angular speed over a second threshold. The second threshold can be a fixed one, or adjustable according to different operators. In certain embodiments, the second threshold can be an angular speed between 180 degrees per second and 360 degrees per second, between 200 degrees per second and 350 degrees per second, between 220 degrees per second and 340 degrees per second, between 240 degrees per second and 330 degrees per second, between 260 degrees per second and 320 degrees per second, or between 280 degrees per second and 310 degrees per second. The second safety mechanism can be actuated more than once during the operation of the digging apparatus. In other words, there can be more than one second threshold.

In certain embodiments, the second safety mechanism comprises a rotation sensor mounted to the powerhead **10** or the handle frame **11** to detect the rotation speed of the powerhead **10** or the handle frame **11.** The detected rotation speed is compared with the second threshold. In certain embodiments, the rotation sensor is a gyroscopic sensor **132.** The gyroscopic sensor **132** may be a single axis, a two-axis, or a three-axis micro-electromechanical systems (MEMS) sensor, or a rotation type sensor. Other types of sensors are equally applicable and within the contemplation of the present disclosure. In certain embodiments, the gyroscopic sensor **132** detects and acceleration speed of the spinning of the powerhead **10** or the handle frame **11.**

In other embodiments, if the detected rotation speed is larger than or equals to a first value, the second safety mechanism can be actuated, and a first safety measure can be activated. If the detected rotation speed is larger than or equals to a second value, the second safety mechanism can be actuated again, and a second safety measure can be activated. In certain embodiments, the first safety measure can be reducing power supply to the motor and the second safety measure can be cutting off power supply to the motor. In certain embodiments, the first safety measure can be cutting off power supply to the motor and the second safety measure can be reversing rotation of the motor for a predetermined period of time. Other combinations of first safety measure and second safety measure are also possible. Also, there can be more than two threshold rotation speed.

In certain embodiments, the first safety mechanism and the second safety mechanism can be interlinked. If both the first safety mechanism and the second safety mechanism are actuated, a more aggressive safety measure can be activated. For instance, if only the first safety mechanism or the second safety mechanism is actuated, the power supply to motor may be cut off. If both the first safety and the second safety mechanism are actuated, the motor rotation may be reversed for a predetermined period of time.

In certain embodiments, the gyroscopic sensor or other types of sensor also detect various conditions of the digging apparatus **1.** For instance, the gyroscopic sensor can detect at least the degree of tilting of the digging apparatus **1** during operation. The tilting of the drill bit **12** is monitored for maintaining a substantially straight drilling direction, which is perpendicular to the ground. If the tilting of the drill bit exceeds a threshold, the safety mechanism may also be actuated.

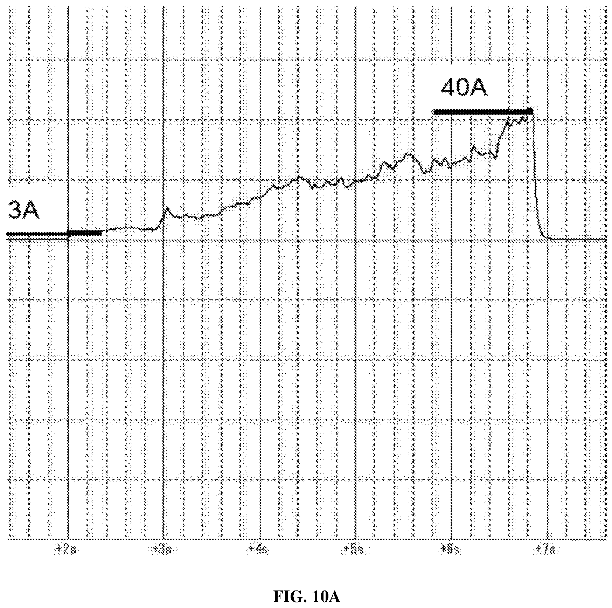

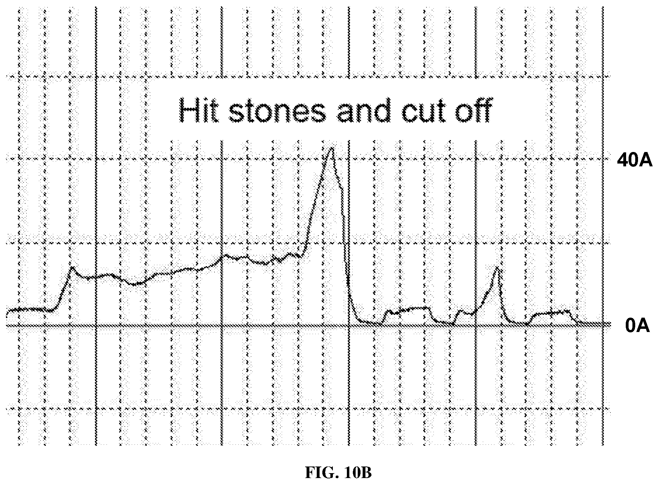

In certain embodiments, a current sensor **131** is provided for measuring at least the electric current delivered from the battery **31** or to the motor **50.** The current sensor **131** may be implemented by shunt measurement of the current from the battery **31,** which can be realized by using a current detection resistor, an operational amplifier, a current transformer, or other similar electronic devices. The data from the current sensor **131** is coupled to a control module **30.** FIG. **10A** shows a current profile of the digging apparatus **1** with an increasing electric current from the battery **31.** The digging apparatus **1** operates a free run without digging into any substrate with a current of approximately 3.2A. When the digging apparatus **1** is digging into a substrate with a torque of approximately 120Nm, the electric current may be higher than 40A. The current sensor **131** detects current exceeding a third threshold and the motor **50** is stopped and locked. FIG. **10B** is a graph showing the electric current measurement when the digging apparatus **1** hits some stones or hard rocks in soil. The electric current may increase significantly in such event with an electric current of more than 40A. The current sensor **131** detects current exceeding the third threshold and the motor **50** is stopped and locked.

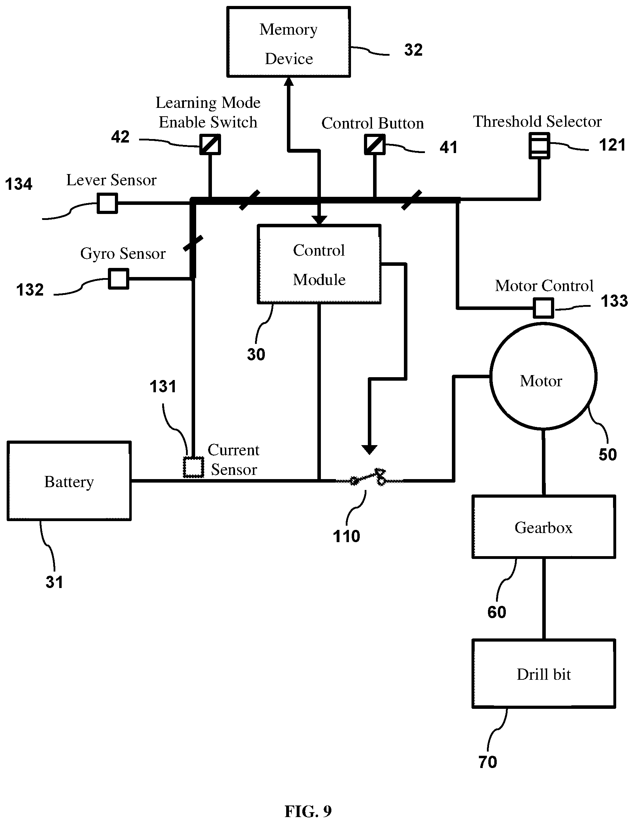

FIG. **9** shows a schematic electrical connection diagram of the digging apparatus **1** in accordance with certain embodiments of the present disclosure. The battery **31** provides electric power to the motor **50** and the control module **30.** A switch **110** is provided between the battery **31** and the motor **50** for cutting off electric power supplied from the battery **31** to the motor **50.** Alternatively, the switch **110** may be configured to enable or disable the operation of the motor **50** by locking the motor **50** or actuating a clutch. The clutch is configured to remove inertia within the gearbox **60.**

In certain embodiments, the first threshold and the second threshold that will actuate the first safety mechanism and the second safety mechanism are configurable by the operator. This configuration allows independent customization of the safety threshold and the sensitivity of the safety mechanism as provided by the braking lever **90** and the lever sensor **134** and the rotation sensor **132.**

In certain embodiments, a threshold selector **121** is provided for the operator to select from a plurality of safety thresholds for each of the first safety mechanism and the second safety mechanism. The threshold selector **121** can be provided at the user interface **104.** The plurality of safety thresholds set the standards based on which the first safety mechanism and the second safety mechanism can be actuated. For instance, the threshold selector **121** allows a selection between a low threshold, a medium threshold, or a high threshold for each safety mechanism. When a low threshold is selected, the safety mechanism can be actuated more easily, e.g. when the powerhead **11** spins a relatively small angle, or spins at a relatively small angular speed. When a high threshold is selected, the safety mechanism can be actuated less easily, e.g. when the powerhead **11** spins a relatively large angle, or spins at a relatively large angular speed. The plurality of safety thresholds can be set at factory or by an operator.

The control module **30** comprises electronic circuits and components with computing capability to achieve control of the motor and the safety mechanisms. As such, in practical implementations of the control module **30,** the control module **30** includes one or more processors and memory device **32.** When any one of the sensors discussed above detects a signal exceeding the safety threshold, the control module **30** is configured to generate an emergency stop/control instruction to stop or reduce power supply to the motor **50.** Alternatively, with the emergency stop/control instruction, the motor **50** can be controlled otherwise as discussed above.

In certain embodiments, the control module **30** is configured with a learning mode. The learning mode is provided to assist the operator to determine an appropriate safety standard suitable to his or her personal physical conditions. In real world applications, it can be inefficient or even dangerous to use the same safety standard for all operators, without taking into account the operator's physical strength. The control module **30,** comprising one or more processors and memory device **32,** is configured to allow the operator to generate and configure user-specific operation profile. The user-specific operation profile records user-specific safety thresholds.

To configure the user-specific operation profile, the control module **30** enters the learning mode and the motor output torque increases gradually or stepwise from zero. The operator starts the drilling using the digging apparatus and the control module **30** keeps tracking various parameters, such as motor current, motor output torque, powerhead spinning angle, powerhead spinning angular speed. The motor output torque increases continuously in the process until interrupted by a specified event. Upon interruption, at least one of the motor current, motor output torque, powerhead spinning angle, powerhead spinning angular speed or other parameters is recorded and converted to the safety threshold for the first safety mechanism and/or the second safety mechanism.

The specified event can be various. In certain embodiments, the specified event is the operator releasing the control button **41** or pressing a trigger. Alternatively, the specified event is the powerhead spins for a predetermined angle, or spins above a predetermined angular speed or a predetermined angular acceleration speed. In other embodiments, the specified event could be the operator hitting braking lever **90.** The user-specific profile for each operator is then memorized and stored in the memory device **32.**

This illustrates the fundamental structure and mechanism of the digging apparatus in accordance with the present disclosure. The digging apparatus is designed in accordance with a hand-operated ground auger, and it is apparent that the present disclosure may be embodied in other types of digging tools without departing from the scope of the appended claims. The present embodiment is, therefore, to be considered in all respects as illustrative and not restrictive. The scope of the disclosure is indicated by the appended claims rather than by the preceding description, and all changes that come within the meaning and range of equivalency of the claims are therefore intended to be embraced therein.

## Claims

1. An electric powered digging apparatus (1), comprising:
a powerhead (10), the powerhead (10) comprises a motor (50) and a gearbox (60);
a handle frame (11), the powerhead (10) is mounted onto the handle frame (11); and
a drill bit (12), the drill bit (12) is driven by the motor (50) to rotate around a longitudinal axis (71),
the electric power digging apparatus (1) further comprises:
a first safety mechanism, wherein the first safety mechanism reduces torque output to the drill bit (12) when the powerhead (10) spins around the longitudinal axis (71) for an angle larger than a first threshold, and
a second safety mechanism, wherein the second safety mechanism reduces torque output to the drill bit (12) when the powerhead (10) spins around the longitudinal drive axis (71) at an angular speed larger than a second threshold,
**characterised in that**
the first safety mechanism comprises a braking lever (90) extending out from the handle frame (11), the braking lever (90) is pivotable relative to the handle frame (11) from a starting position (SP) to an end position (EP), an angle (α) between the starting position (SP) and the end position (EP) of the braking lever (90) is larger than or equal to the first threshold.

2. The electric powered digging apparatus (1) of claim 1, wherein the braking lever (90) is pivotable to a first end position corresponding to a first angle at which the first safety mechanism is actuated, and the braking lever (90) is further pivotable to a second end position corresponding to a second angle at which the first safety mechanism is actuated again.

3. The electric powered digging apparatus (1) of claim 1, wherein the first safety mechanism further comprises a sensor (134) for sensing the pivoting angle (α) of the braking lever (90).

4. The electric powered digging apparatus (1) of claim 1, wherein the first safety mechanism further comprises a switch to be actuated by the braking lever (90) as it pivots from the starting position (SP) to the end position (EP).

5. The electric powered digging apparatus (1) of claim 1, wherein the first safety mechanism further comprises a biasing member (97) for returning the braking lever (90) from the end position (EP) to the starting position (SP).

6. The electric powered digging apparatus (1) of claim 1, wherein the starting position (SP) of the braking lever (90) is adjustable.

7. The electric powered digging apparatus (1) of claim 1, wherein the second safety mechanism comprises a rotation sensor (132) coupled to the powerhead (10) or the handle frame (11), the rotation sensor (132) is configured to measure the angular speed of the powerhead (10) or the handle frame (11), wherein the rotation sensor (132) is optionally a gyroscopic sensor.

8. The electric powered digging apparatus (1) of claim 1, wherein the electric power to the motor (50) is cut off or is reduced so that the motor output torque is reduced, when at least one of the first safety mechanism and the second safety mechanism is actuated.

9. The electric powered digging apparatus (1) of claim 1, wherein the motor rotation is reversed for a predetermined period of time when at least one of the first safety mechanism and the second safety mechanism is actuated.

10. The electric powered digging apparatus (1) of claim 1, wherein the powerhead (10) further comprises a clutch, the clutch is actuated to lock the motor (50) and/or gearbox (60) when at least one of the first safety mechanism and the second safety mechanism is actuated.

11. The electric powered digging apparatus (1) of claim 1, further comprising a current sensor (131), electric power to the motor (50) is cut off when the current sensor (131) measures an electric current to the motor (50) larger than a third threshold.

12. The electric powered digging apparatus (1) of claim 1, further comprising a control module (30), the control module (30) is configured to input, store and apply user-specific operation profile, wherein each user-specific operation profile allows a respective user to specify at least one of the first threshold and the second threshold.

13. The electric powered digging apparatus (1) of claim 1, wherein the control module (30) is configured for the user to input a respective operation profile with a learning mode, at least one of the first threshold and the second threshold is determined when a specified event occurs as a motor output torque is increased from zero.

14. The electric powered digging apparatus (1) of claim 13, wherein the specified event is selected from one of the following: a user releases a trigger, a user presses a trigger, the powerhead (10) spins for a predetermined angle, the powerhead (10) spins above a predetermined angular speed, and the powerhead (10) spins above a predetermined angular acceleration speed.

15. The electric powered digging apparatus (1) of claim 1, further comprising a threshold selector (121) for an operator to select from multiple values for the first threshold and/or the second threshold.

## Patentansprüche

1. Elektrisch angetriebenes Aushubgerät (1), umfassend:
einen Antriebskopf (10), wobei der Antriebskopf (10) einen Motor (50) und ein Getriebe (60) umfasst;
einen Griffrahmen (11), wobei der Antriebskopf (10) an dem Griffrahmen (11) montiert ist; und
einen Bohrer (12), wobei der Bohrer (12) durch den Motor (50) angetrieben wird, um sich um eine Längsachse (71) zu drehen,
wobei das elektrisch angetriebene Aushubgerät (1) ferner umfasst:
einen ersten Sicherheitsmechanismus, wobei der erste Sicherheitsmechanismus die Drehmomentabgabe an den Bohrer (12) reduziert, wenn sich der Antriebskopf (10) um die Längsachse (71) um einen Winkel dreht, der größer als ein erster Schwellenwert ist, und
einen zweiten Sicherheitsmechanismus, wobei der zweite Sicherheitsmechanismus die Drehmomentabgabe an den Bohrer (12) reduziert, wenn sich der Antriebskopf (10) um die Längsantriebsachse (71) mit einer Winkelgeschwindigkeit dreht, die größer als ein zweiter Schwellenwert ist,
**dadurch gekennzeichnet, dass** der erste Sicherheitsmechanismus einen Bremshebel (90) umfasst, der sich vom Griffrahmen (11) aus erstreckt,
wobei der Bremshebel (90) relativ zum Griffrahmen (11) aus einer Ausgangsposition (SP) in eine Endposition (EP) schwenkbar ist, wobei ein Winkel (α) zwischen der Ausgangsposition (SP) und der Endposition (EP) des Bremshebels (90) größer oder gleich dem ersten Schwellenwert ist.

2. Elektrisch angetriebenes Aushubgerät (1) nach Anspruch 1,
wobei der Bremshebel (90) in eine erste Endposition schwenkbar ist, die einem ersten Winkel entspricht, bei dem der erste Sicherheitsmechanismus betätigt wird, und wobei der Bremshebel (90) ferner in eine zweite Endposition schwenkbar ist, die einem zweiten Winkel entspricht, bei dem der erste Sicherheitsmechanismus erneut betätigt wird.

3. Elektrisch angetriebenes Aushubgerät (1) nach Anspruch 1,
wobei der erste Sicherheitsmechanismus ferner einen Sensor (134) zum Erfassen des Schwenkwinkels (α) des Bremshebels (90) umfasst.

4. Elektrisch angetriebenes Aushubgerät (1) nach Anspruch 1,
wobei der erste Sicherheitsmechanismus ferner einen Schalter umfasst, der durch den Bremshebel (90) betätigt wird, wenn dieser von der Ausgangsposition (SP) in die Endposition (EP) schwenkt.

5. Elektrisch angetriebenes Aushubgerät (1) nach Anspruch 1,
wobei der erste Sicherheitsmechanismus ferner ein Vorspannelement (97) zum Zurückführen des Bremshebels (90) aus der Endposition (EP) in die Ausgangsposition (SP) umfasst.

6. Elektrisch angetriebenes Aushubgerät (1) nach Anspruch 1,
wobei die Ausgangsposition (SP) des Bremshebels (90) einstellbar ist.

7. Elektrisch angetriebenes Aushubgerät (1) nach Anspruch 1,
wobei der zweite Sicherheitsmechanismus einen Drehungssensor (132) umfasst, der mit dem Antriebskopf (10) oder dem Griffrahmen (11) verbunden ist, wobei der Drehungssensor (132) dazu ausgelegt ist, die Winkelgeschwindigkeit des Antriebskopfes (10) oder des Griffrahmens (11) zu messen, wobei der Drehungssensor (132) optional ein gyroskopischer Sensor ist.

8. Elektrisch angetriebenes Aushubgerät (1) nach Anspruch 1,
wobei die Stromversorgung zum Motor (50) unterbrochen oder reduziert wird, so dass das Ausgangsdrehmoment des Motors reduziert wird, wenn zumindest eines aus erstem Sicherheitsmechanismus und zweitem Sicherheitsmechanismus betätigt wird.

9. Elektrisch angetriebenes Aushubgerät (1) nach Anspruch 1,
wobei die Motordrehung für einen vorbestimmten Zeitraum umgekehrt wird, wenn zumindest eines aus erstem Sicherheitsmechanismus und zweitem Sicherheitsmechanismus betätigt wird.

10. Elektrisch angetriebenes Aushubgerät (1) nach Anspruch 1,
wobei der Antriebskopf (10) ferner eine Kupplung umfasst, wobei die Kupplung betätigt wird, um den Motor (50) und/oder das Getriebe (60) zu sperren, wenn zumindest eines aus erstem Sicherheitsmechanismus und zweitem Sicherheitsmechanismus betätigt wird.

11. Elektrisch angetriebenes Aushubgerät (1) nach Anspruch 1,
ferner umfassend einen Stromsensor (131), wobei die Stromversorgung zum Motor (50) unterbrochen wird, wenn der Stromsensor (131) einen Strom zum Motor (50) misst, der größer als ein dritter Schwellenwert ist.

12. Elektrisch angetriebenes Aushubgerät (1) nach Anspruch 1,
ferner umfassend ein Steuermodul (30), wobei das Steuermodul (30) dazu ausgelegt ist, ein benutzerspezifisches Betriebsprofil einzugeben, abzuspeichern und anzuwenden, wobei jedes benutzerspezifische Betriebsprofil es einem jeweiligen Benutzer ermöglicht, zumindest eines aus erstem Schwellenwert und zweitem Schwellenwert festzulegen.

13. Elektrisch angetriebenes Aushubgerät (1) nach Anspruch 1,
wobei das Steuermodul (30) so ausgelegt ist, dass der Benutzer ein jeweiliges Betriebsprofil mit einem Lernmodus eingeben kann, wobei zumindest eines aus erstem Schwellenwert und zweitem Schwellenwert bei Auftreten eines festgelegten Ereignisses bestimmt wird, wenn das Ausgangsdrehmoment des Motors ausgehend von Null erhöht wird.

14. Elektrisch angetriebenes Aushubgerät (1) nach Anspruch 13, wobei das festgelegte Ereignis aus einem der folgenden ausgewählt wird: ein Benutzer löst einen Auslöser aus, ein Benutzer drückt einen Auslöser, der Antriebskopf (10) dreht sich um einen vorbestimmten Winkel, der Antriebskopf (10) dreht über einer vorbestimmten Winkelgeschwindigkeit und der Antriebskopf (10) dreht über einer vorbestimmten Winkelbeschleunigungsgeschwindigkeit.

15. Elektrisch angetriebenes Aushubgerät (1) nach Anspruch 1,
ferner umfassend einen Schwellenwertselektor (121), mit dem ein Bediener aus mehreren Werten für den ersten Schwellenwert und/oder den zweiten Schwellenwert auswählen kann.

## Revendications

1. Appareil d'excavation à entraînement électrique (1), comprenant :
une tête motrice (10), la tête motrice (10) comprenant un moteur (50) et
un mécanisme de transmission (60) ;
un cadre formant poignée (11), la tête motrice (10) étant montée sur le cadre formant poignée (11) ; et
un foret (12), le foret (12) étant entraîné par le moteur (50) pour tourner autour d'un axe longitudinal (71),
l'appareil d'excavation à entraînement électrique (1) comprenant en outre :
un premier mécanisme de sécurité, le premier mécanisme de sécurité réduisant le couple transmis au foret (12) lorsque la tête motrice (10) tourne autour de l'axe longitudinal (71) d'un angle supérieur à un premier seuil, et
un deuxième mécanisme de sécurité, le deuxième mécanisme de sécurité réduisant le couple transmis au foret (12) lorsque la tête motrice (10) tourne autour de l'axe d'entraînement longitudinal (71) à une vitesse angulaire supérieure à un deuxième seuil,
**caractérisé en ce que** le premier mécanisme de sécurité comprend un levier de freinage (90) s'étendant à partir du cadre formant poignée (11),
le levier de freinage (90) pouvant pivoter par rapport au cadre formant poignée (11) d'une position de départ (SP) à une position finale (EP), un angle (α) entre la position de départ (SP) et la position finale (EP) du levier de freinage (90) étant supérieur ou égal au premier seuil.

2. Appareil d'excavation à entraînement électrique (1) selon la revendication 1,
dans lequel le levier de freinage (90) peut pivoter vers une première position finale correspondant à un premier angle auquel le premier mécanisme de sécurité est actionné, et le levier de freinage (90) peut en outre pivoter vers une deuxième position finale correspondant à un deuxième angle auquel le premier mécanisme de sécurité est à nouveau actionné.

3. Appareil d'excavation à entraînement électrique (1) selon la revendication 1,
dans lequel le premier mécanisme de sécurité comprend en outre un capteur (134) pour détecter l'angle de pivotement (α) du levier de freinage (90).

4. Appareil d'excavation à entraînement électrique (1) selon la revendication 1,
dans lequel le premier mécanisme de sécurité comprend en outre un interrupteur destiné à être actionné par le levier de freinage (90) lorsqu'il pivote de la position de départ (SP) à la position finale (EP).

5. Appareil d'excavation à entraînement électrique (1) selon la revendication 1,
dans lequel le premier mécanisme de sécurité comprend en outre un élément de sollicitation (97) pour ramener le levier de freinage (90) de la position finale (EP) à la position de départ (SP).

6. Appareil d'excavation à entraînement électrique (1) selon la revendication 1,
dans lequel la position de départ (SP) du levier de freinage (90) est réglable.

7. Appareil d'excavation à entraînement électrique (1) selon la revendication 1,
dans lequel le deuxième mécanisme de sécurité comprend un capteur de rotation (132) couplé à la tête motrice (10) ou au cadre formant poignée (11), le capteur de rotation (132) étant conçu pour mesurer la vitesse angulaire de la tête motrice (10) ou du cadre formant poignée (11), en option, le capteur de rotation (132) étant un capteur gyroscopique.

8. Appareil d'excavation à entraînement électrique (1) selon la revendication 1,
dans lequel l'alimentation électrique du moteur (50) est coupée ou réduite de manière à réduire le couple de sortie du moteur, lorsque l'un au moins parmi le premier mécanisme de sécurité et le deuxième mécanisme de sécurité est actionné.

9. Appareil d'excavation à entraînement électrique (1) selon la revendication 1,
dans lequel la rotation du moteur est inversée pendant une période de temps prédéterminée lorsque l'un au moins parmi le premier mécanisme de sécurité et le deuxième mécanisme de sécurité est actionné.

10. Appareil d'excavation à entraînement électrique (1) selon la revendication 1,
dans lequel la tête motrice (10) comprend en outre un embrayage, l'embrayage étant actionné pour bloquer le moteur (50) et/ou le mécanisme de transmission (60) lorsque l'un au moins parmi le premier mécanisme de sécurité et le deuxième mécanisme de sécurité est actionné.

11. Appareil d'excavation à entraînement électrique (1) selon la revendication 1,
comprenant en outre un capteur de courant (131), l'alimentation électrique du moteur (50) étant coupée lorsque le capteur de courant (131) mesure un courant électrique vers le moteur (50) qui est supérieur à un troisième seuil.

12. Appareil d'excavation à entraînement électrique (1) selon la revendication 1,
comprenant en outre un module de commande (30), le module de commande (30) étant conçu pour entrer, stocker et appliquer un profil de fonctionnement spécifique à l'utilisateur, chaque profil de fonctionnement spécifique à l'utilisateur permettant à un utilisateur respectif de spécifier au moins l'un parmi le premier seuil et le deuxième seuil.

13. Appareil d'excavation à entraînement électrique (1) selon la revendication 1,
dans lequel le module de commande (30) est conçu pour permettre à l'utilisateur d'entrer un profil de fonctionnement respectif avec un mode d'apprentissage, l'un au moins parmi le premier seuil et le deuxième seuil étant déterminé lorsqu'un événement spécifié se produit et que le couple de sortie du moteur est augmenté à partir de zéro.

14. Appareil d'excavation à entraînement électrique (1) selon la revendication 13,
dans lequel l'événement spécifié est sélectionné parmi l'un des événements suivants : un utilisateur relâche une gâchette, un utilisateur appuie sur une gâchette, la tête motrice (10) tourne d'un angle prédéterminé, la tête motrice (10) tourne à une vitesse angulaire supérieure à une vitesse prédéterminée, et la tête motrice (10) tourne à une vitesse angulaire d'accélération supérieure à une vitesse prédéterminée.

15. Appareil d'excavation à entraînement électrique (1) selon la revendication 1,
comprenant en outre un sélecteur de seuil (121) permettant à un opérateur de sélectionner parmi plusieurs valeurs pour le premier seuil et/ou le deuxième seuil.
